# EUROPEAN PATENT SPECIFICATION

(11) **EP 2 978 539 B1**
(45) Date of publication and mention of the grant of the patent: **31.05.2017**
(21) Application number: 14711994.5
(22) Date of filing: 25.03.2014
(51) Int. Cl.: B05B 13/02, B05B 15/12, B05D 7/00

(54) **SYSTEM FOR POWDER COATING FOR ELEMENTS TO BE COATED OF CONSIDERABLE LENGTH**
PULVERBESCHICHTUNGSANLAGE ZUM BESCHICHTEN VON LÄNGLICHEN WERKSTÜCKEN
SYSTÈME POUR LE REVÊTEMENT PAR POUDRE DE PROFILÉS ALLONGÉS

(30) Priority: 29.03.2013 IT MI20130488
(43) Date of publication of application: 03.02.2016
(73) Proprietor: SAT (SURFACE ALUMINIUM TECHNOLOGIES) S.p.A., 37135 Verona (IT)
(72) Inventor: TREVISAN, Silvio Maria, 37121 Verona (IT)
(74) Representative: Rapisardi, Mariacristina
(86) International application number: PCT/EP2014/055923
(87) International publication number: WO 2014/154668

(56) References cited:
- EP-A1- 0 021 209
- EP-A1- 0 164 899
- EP-A2- 1 038 591
- WO-A1-2004/103573
- CN-U- 201 799 367
- DE-C1- 19 722 773
- FR-A5- 2 131 180
- IT-A1- BG20 110 033
- Anonymous: "Vertical powder coating lines", Trevisan.com , 14 May 2011 (2011-05-14), XP002709698, Retrieved from the Internet: URL:http://web.archive.org/web/20110516110 551/http://www.trevisan.com/pdf/vertical_c oating_lines.pdf [retrieved on 2013-08-02]
- anonymous: "System for coating large pieces with vertical arrangement, like aluminum profiles", Euroimpianti , 1 February 2000 (2000-02-01), XP002709699, Retrieved from the Internet: URL:http://www.euroimpianti.com/gallery/co mplete-systems~1/euro-vertical~33.html [retrieved on 2013-08-02]
- Anonymous: "Pre-treatment pvc tank for coating", Creative Systems , 7 May 2012 (2012-05-07), XP002709700, Retrieved from the Internet: URL:http://www.surfacecoatingindia.com/pre -treatment_plant.html [retrieved on 2013-08-05]

## Description

The present invention refers to a system for synthetic resin-based powder coating for elements to be coated of considerable length - preponderant over the other two dimensions - such as bars and extruded section bars of aluminium alloy or structural sections made of ferrous material, hanging in a vertical position from an overhead conveyor line.

Continuous industrial systems for powder coating with synthetic resin-based powders have long been in widespread use. In these systems, the elements to be coated, which may also be of considerable length - preponderant over the other two dimensions - such as bars and extruded section bars of aluminium alloy or structural sections made of ferrous material, are hooked in a vertical position to an overhead conveyor line, which horizontally translates the elements to be coated through the various stations of the coating system, in which the following are carried out in succession:
hooking the elements to be coated to the overhead conveyor line with said elements generally in a vertical position,
pre-treatment of the surfaces of the elements to be coated, including acid degreasing and deoxidation, and subsequent washing;
drying the elements to be coated,
the actual coating process in coating booths with spraying by means of special pneumatic spray guns for spraying the synthetic resin-based coating powders, which, owing to the electrostatic effect, adhere to the surfaces of the elements to be coated,
polymerisation of the resins through the controlled contribution of heat normally by means of hot air in an oven through which the elements to be coated pass, cooling and unhooking from the overhead conveyor line and unloading of the coated elements.

It is common knowledge that systems for powder coating extend over long paths that significantly occupy the useful floor area of the buildings in which they are installed, and although they can be optimised for the production of lots having large amounts of homogeneous elements to be coated, they typically lack the flexibility needed for rapid tailoring of the treatment cycles for production lots of homogeneous elements to be coated of smaller amounts and/or differing in characteristics and colours.

As is known, in transitioning from the production of one lot of elements to the next, the downtime of the conveyor line required for modification of the pre-treatment parameters, for changing the colours of the coatings, and for modification of the parameters for different polymerisation of the coating powders, can cause, in the case of smaller lots of homogeneous elements to be coated, excessive downtime in subsequent stations of the production process, namely, discontinuity in the loading of elements to be coated at the overhead conveyor line, with a resulting loss affecting the quality, efficiency and yield of the coating system.

It is also known that the consumption of energy in conventional systems is particularly significant due to the substantial contribution of heat needed for drying the elements downstream of the degreasing and washing pre-treatments, and for efficient polymerisation of the coating powders on the elements to be coated, said polymerisation normally being achieved at high temperatures in the hot-air polymerisation oven.

Moreover, in conventional systems, the considerable physical distance existing between one production stage and another, and the resulting impossibility of supervising a number of production stages from the same position, makes it necessary to increase the staff employed, which results in inefficiency and increases in production costs.

Document entitled "Vertical powder coating lines" (Trevisan.com - 14 May 2011, XP002709698) discloses a system for powder coating elements according to the preamble of claim 1.

The principal technical task of the present invention is therefore that of realising a system for powder coating for elements to be coated of considerable length, for production lots of homogeneous elements of relatively limited amounts and that makes it possible to eliminate the technical drawbacks of the prior art mentioned hereinabove.

As relates to this technical task, an aim of the invention is to realise a system for powder coating for elements to be coated of considerable length that makes it possible to achieve an ideal balance between the dimensions of a system for industrial production at the level of large homogeneous quantities and a system for production lots of homogeneous elements to be coated of relatively limited treatment cycles based on the lots of homogeneous elements to be coated, characterised for example by the length, the geometry of the section and thickness, the colour, typology and intended use, and the various needs and technical specifications of the client.

Yet another aim of the invention is to offer a system with simplified management of the coating process, but that ensures full control of the process as regards single consecutive procedures that determine the quality of the coating of the finished product.

A further aim of the invention is to realise a system that limits energy consumption and thus permits a reduction of the specific operating costs for the various coating lots of elements to be coated having homogeneous characteristics.

Not least in importance, an aim of the invention is to realise a system that is characterised by features offering ergonomics, safety, technological specialisation of the work zones, accessibility and easy maintenance, easy construction and containment of the occupied floor space of the facility in which it is installed.

The technical task, as well as these and other aims, according to the invention, are achieved by realising a system for powder coating elements to be coated of considerable length, characterised in that it comprises within the overall occupied floor space, a safety area dedicated to the work activities of personnel, exhibiting a zone dedicated to the stage of loading and a zone dedicated to the stage of unloading the finished elements from the overhead conveyor line, said safety area marking the perimeter of a single, central block exhibiting the activities of the production process and the specific units predisposed thereto and identified as a unit dedicated to the pre-treatment of the elements to be coated, a unit dedicated to the drying of the elements to be coated and a unit for the polymerisation of coating powders deposited on the elements to be coated, there being further provided a unit dedicated to coating and an overhead conveyor line for the elements to be coated that extends with a winding path.

An advantage in terms of energy consumption is obtained owing to the specific configuration of the system, that is, owing to the fact that the components related to the thermal processes (heated baths in the tunnel, hot air chambers of the ovens) are found together in the single, central block of the system and therefore, unlike the case of conventional systems in which these components are independent of each other and distributed over large spaces, heat losses through the walls of the components are considerably lower as these exchange surfaces are markedly smaller.

With respect to conventional systems, the fact that the activities of the various operators take place in a smaller space and the fact that it is possible to monitor the course of a good part of the process from one position, make greater efficiency in the employment of personnel and a consequent reduction of personnel possible; on the other hand, the reduction of personnel also reduces the need for coordination between the operators employed and therefore the figures in charge of controlling and coordinating can also be avoided given that in practice, direct communication between the operators is now possible, without this requiring operators to leave their workstations.

Further characteristics and advantages of the system constituting the object of the present invention will become more apparent in the description of a preferred, but not exclusive embodiment according to the invention and illustrated by way of non-limiting example in the attached figures, in which:

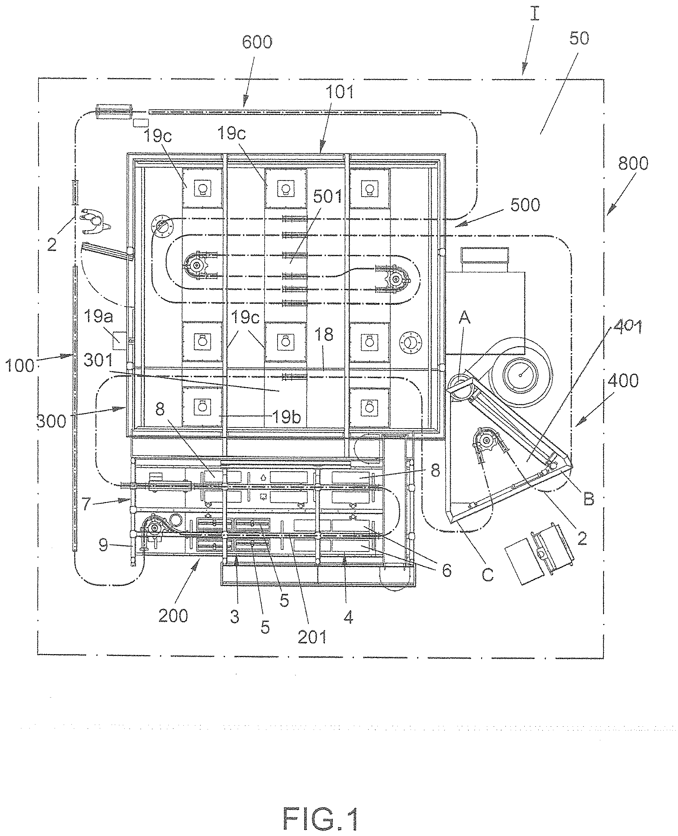

- Figure 1 shows a schematic plan view of the system, highlighting the occupied floor space, the safety area, the functional zones for loading and unloading the elements to be coated, the central block comprising the units for pre-treatment, for drying and for polymerisation of the coating powders, and the coating unit

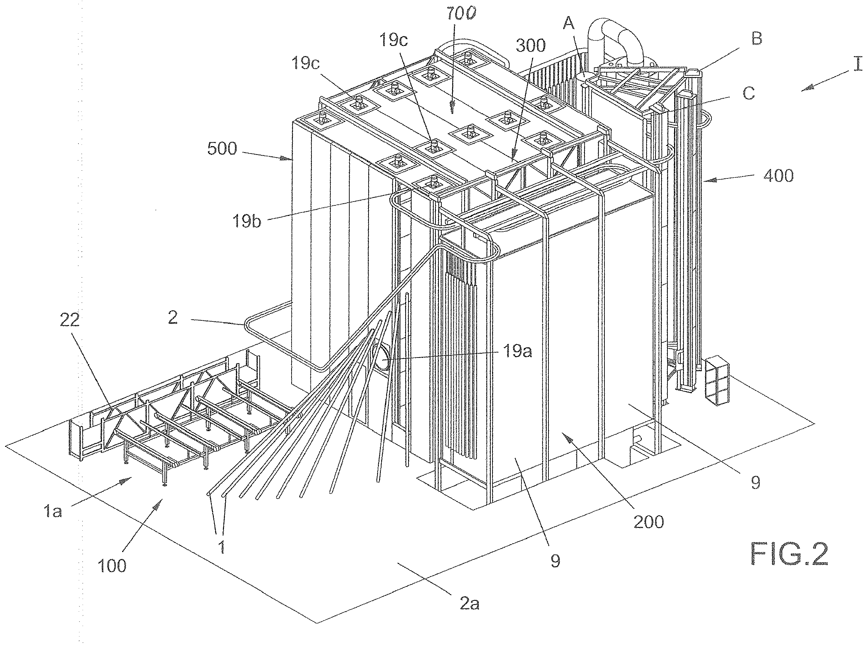

- Figure 2 shows a perspective view of the system from the loading and pre-treatment sides

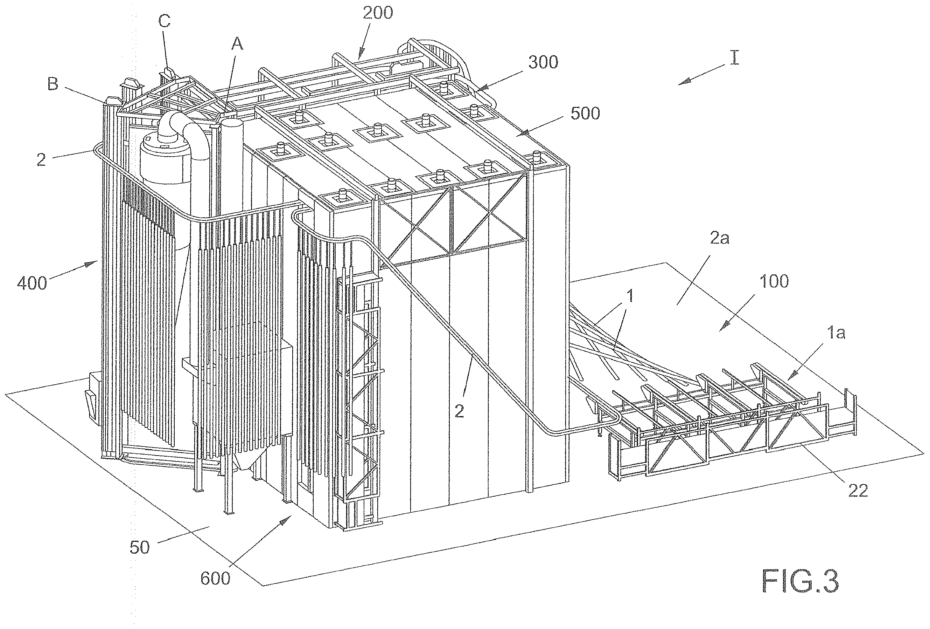

- Figure 3 shows a perspective view of the system from the coating and unloading sides

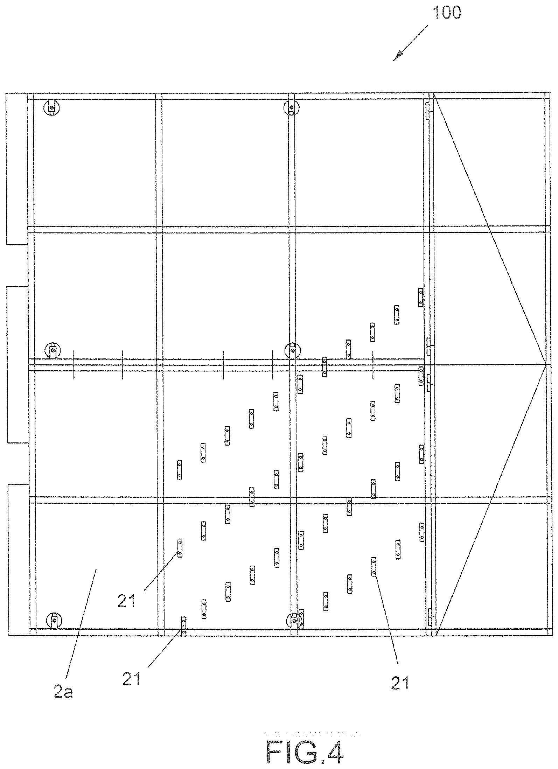

- Figure 4 shows a plan view of the floor with the protuberances present in the loading station

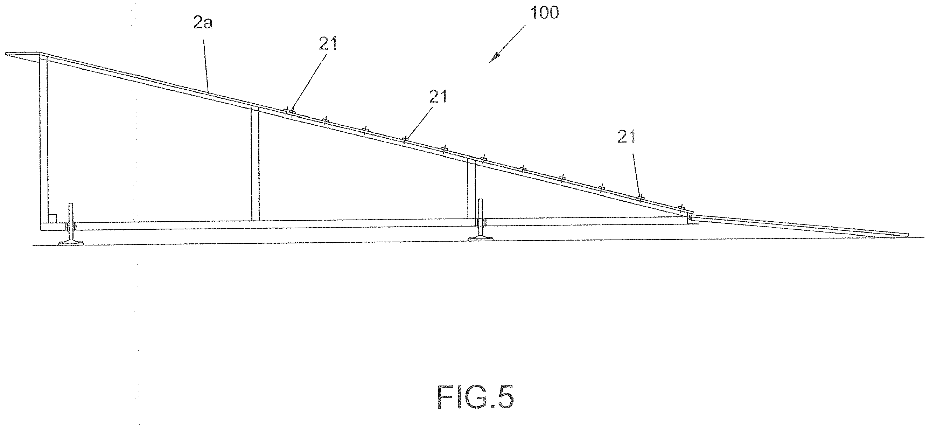

- Figure 5 shows the floor of Figure 4 in a side elevation view

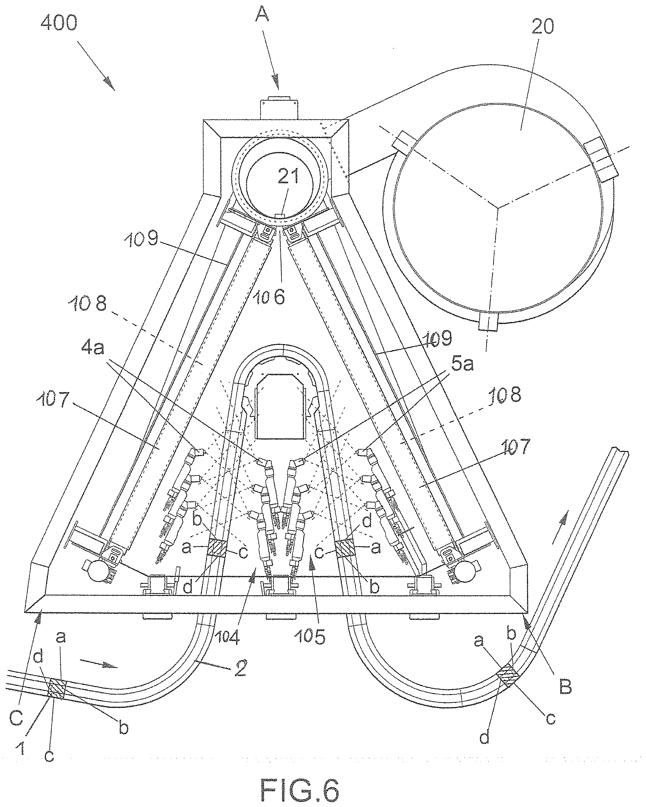

- Figure 6 is an enlarged plan view of the coating booth.

With reference to the cited figures, a system for powder coating for elements to be coated of considerable length is indicated in its entirety by the reference letter I.

In the functional layout, the following can be typically identified: an overall floor surface area 800 of the system, which contains a safety area 50 dedicated to the work activities of personnel, and within this area 50 a zone 100 dedicated to the stage of loading and a zone 600 dedicated to the stage of unloading the finished elements 1 from the conveyor line 2 are indicated.

Inside the safety area 50, there is indicated a single, central block 101 exhibiting a unit 200 dedicated to the pre-treatment of the elements to be coated, a unit 300 dedicated to the drying of the elements to be coated and a unit 500 for the polymerisation of the coating powders deposited on the elements to be coated.

A unit 400 dedicated to coating and that has a triangular plan is identified alongside the central block 101.

More specifically, in the loading station 100, the elements to be coated of considerable length 1 are hooked in a horizontal position to the overhead conveyor line 2 by means of hooking systems; through an inclined upward path 2a of the overhead conveyor line 2, the hooking systems translate the elements to be coated 1 from the horizontal position, in which they are found in the containers 1 a utilised for the storage thereof, to the vertical position hanging from the overhead conveyor line 2.

On the floor of the loading station 100 and at the inclined upward path 2a of the overhead conveyor line 2, the system comprises a loading system with an inclined ramp and protuberances 21, which prevents contact between the elements to be coated 1, particularly between the elements to be coated 1 that are of different lengths, and thus damage to the surfaces, during the transition from the horizontal position to the vertical position.

The overhead conveyor line 2 then conveys the elements to be coated 1 to the pre-treatment unit 200, inside of which the pre-treatment tunnel 201 is found, in which the elements to be coated 1 are typically subjected to an acid degreasing cycle in the station 3 and to an acid deoxidation cycle in the station 4; the process fluids spray the elements to be coated 1 from above and are then collected below by drips in specific collecting and recirculation tanks 5 and 6.

The elements to be coated 1 then pass through consecutive washing stations 7 with differently sprayed mains water, collected below in the tanks 8, from which it is then suitably treated and recycled.

The stations 3, 4, 7 in the pre-treatment tunnel 201 and the respective collecting tanks 5, 6, 8 are advantageously positioned along two tracts of the path of the overhead conveyor line 2 side by side at 180°.

The walls 9 of the pre-treatment tunnel 201 are advantageously realised in plastic material, so as to permit possible treatment of the elements to be coated with specific and more aggressive fluids, without compromising the load-bearing metal structure of the tunnel; the collecting tanks 5 and 6 are also advantageously realised in plastic material, so as to reduce corrosion phenomena and limit maintenance work on the tunnel, with a longer duration of the components over time.

The overhead conveyor line 2 then leaves the pre-treatment unit 200 and enters the next adjacent drying unit 300, where, in the hot-air drying oven 301 any trace of moisture is eliminated from the elements to be coated 1, with the controlled contribution of heat.

From the drying unit 300 exit, the overhead conveyor line 2 translates the elements to be coated 1 into coating unit 400 for synthetic resin-based powder coating. More specifically, the coating booth 401 in the coating unit 400 has a triangular plan schematically identified by vertices A, B and C, within which the conveyor line 2 follows an angled path.

The conveyor line 2 enters the coating booth from side BC and completes a path that brings the elements to be coated 1 toward the vertex A and then returns and has said elements to be coated 1 exit from side BC in a substantially symmetrical position with respect to the vertex A at the entrance of the booth.

Along the approaching path of the conveyor line 2 to the vertex A, a first set of electrostatic spray guns 104 for the coating powders is suitably installed on the two sides of the elements to be coated 1, with nozzles 4a directed in the direction of movement of the conveyor line 2, whereas along the departing path of the line 2 away from the vertex A, a second set of electrostatic spray guns 105 is suitably installed on the two sides of the elements to be coated 1, with nozzles 5a directed in the direction opposite that of the conveyor line 2.

The sets of electrostatic spray guns 104 and 105 have reciprocating and controlled movement along a vertical axis so as to suitably spray the coating powders along the entire extension of the height of said elements to be coated 1.

The set of electrostatic guns 104 substantially sprays the lateral a-c and rear surfaces d of the elements to be coated 1, with the coating powders, whereas the set of electrostatic spray guns 105 substantially sprays the lateral a-c and front surfaces b of the elements to be coated 1, with the coating powders.

At the vertex A of the booth, a vertical suction inlet 106 of the system for suctioning the air of the cabin by means of a cyclone 20 is suitably mounted substantially along the entire height of the booth and has horizontal and vertical sections that are adjustable by means of movable baffles and suitable movement and control systems, which are not illustrated in the drawings.

The flow and the velocity of the suctioned air, and the vertical position within the bounds of the height of the coating booth can thus be advantageously calibrated also based on the size and dimensional features of the elements to be coated.

The concentration of the air flow being suctioned in the booth and of the residual coating powder not directly deposited on the elements to be coated 1, through a sole vertical suction inlet 106 positioned at the vertex A of the triangular section of the booth, flows against the elements to be coated 1 in the approaching path to the vertex A and in the departing path, and it advantageously increases deposition, on the elements to be coated 1, of the residual portion of coating powder not deposited by direct effect of the sets of electrostatic spray guns 104 and 105 by means of the nozzles 4a and 5a, and remaining suspended in the air in the booth.

The walls of the booth delimiting the path of the conveyor line 2 are constituted by suitable closed section sheets of plastic material 107, inserted on and kept tight by motorised rotatable rollers 108 that cause the rotation thereof; the portion of excess coating powders deposited on the walls is retrieved by means of the scraper blade 109, which, by suitably scraping against the flexible material of the sheet 107, detaches the coating powders, directing them into a special collection and recycling system.

On the bottom of the booth, suitable section elements operate and when suitably moved, they collect from the bottom the excess coating powders that have possibly accumulated there, conveying them toward the collection and recycling system.

It should also be specified that together with the course of the overhead conveyor line 2 inside the booth, the particular geometry of the booth, in the shape of a narrow "V", advantageously makes it possible for the elements to be coated 1, in transit in the booth, to encounter direct spraying by the sets of electrostatic spray guns 104 and 105, and the coating powder, which, given that it has not directly deposited on the elements to be coated 1, travels toward the vertical suction inlet 12 located in the vertex A of the V-shaped plan, and encounters the "array of profiles" in transit prior to being suctioned by the air extraction system of the booth.

With the powders sprayed being equal, the portion of coating powders directly deposited on the elements to be coated 1 during transit through the coating booth thus advantageously increases, thereby augmenting the quality of the coating and the efficiency of the system, and likewise reducing the portion of powders retrieved by the air ventilation and filtering system of the booth.

As mentioned, suctioning of the air in the booth is realised by means of a suction inlet 106 with a vertical axis, located in the vertex A of the V-shaped plan, and that has a variable geometry, and thus makes it possible to change the height at which the suctioning is concentrated based on the dimensional features of the elements to be coated.

In this manner, with the powders sprayed being equal, the concentration of coating powders not deposited and remaining in the air in the booth proves to be limited and thus more easily controlled for the purposes of safety.

Compared to the number conventionally used, there may be fewer electrostatic spray guns in each set 104 and 105, with considerable advantages as regards the amount of air to be suctioned and thus as regards the power of the extraction fan.

Although the booth is of the "open" type, coating powder does not leave the coating booth because, with the powders sprayed being equal, the amount of coating powder remaining suspended and not deposited on the elements to be coated is limited, and the system for intake through the suction inlet 106 with a variable geometry can be of more limited power and particularly efficient.

The coating booth stays substantially clean, given that with the powders sprayed being equal, there are limited amounts of excess coating powders that have not deposited; cleaning the system for a change in the colour of the coating powders takes place rapidly and usually does not require the personnel in charge to enter inside the coating booth.

Moreover, given the high yield of coating powder deposition, the consumption of coating powder is advantageously reduced in the stages of cross-flow start-up at the start of a new lot of elements to be coated, and in the case of the use of particular coating powders that do not permit easy retrieval of the coating powder by means of the system for ventilation and filtering of the air in the booth, as well as in the case of particular coating powders for which retrieval is not advised because the amounts retrieved would have characteristics differing too much from the original coating powder.

In general, considering the high yield of coating powder deposition, the coating quality is advantageously improved owing to the prevalent depositing of original coating powder not coming from the retrieval process, and thus having more controlled physical-chemical characteristics.

Owing to the arrangement of the sets of electrostatic spray guns on both sides of the overhead conveyor line, both of the principal faces of the elements to be coated 1 can be adequately coated, without having to adopt swivel hooks. Furthermore, the spray nozzle 4a and 5a of each individual spray gun can be conveniently inclined in such a manner as to improve the penetration of the coating on the corners and grooves of the elements to be coated 1 and the inclination of the jet with respect to the face of the elements to be coated 1 makes it possible to coat even the corners thereof adequately.

The V-shaped walls of the booth constituted by closed section sheets of plastic material 107, inserted on and kept tight by motorised rotatable rollers 108 are continuously cleaned by the scraper blade 109 and the powder taken off the walls can be retrieved by a suitable conveying and collection system.

Owing to the intelligent and calibrated management of the intake through the suction inlet 106, the floor of the booth will remain almost perfectly clean and in any case, even the coating powder taken from the floor thanks to suitable sector blades, can be retrieved by a suitable conveying and collection system.

The roof of the booth represents the most critical zone for the risk of leakage of the coating powder that has not deposited on the elements to be coated 1 and that is suspended in the air in the booth, but owing to the variable suction through the suction inlet 106, in the booth constituting the object of the invention, suction can also be concentrated in the upper part of the suction inlet and thus the coating powder that has not deposited can be suctioned before it is able to leak out from the roof.

At the exit of the coating unit 400, the elements to be coated 1, on which the synthetic resin-based coating powders have suitably deposited electrostatically, are conveyed by the overhead conveyor line 2 into the polymerisation unit, in which the conveyor line follows a winding course inside the hot-air polymerisation oven 501; the controlled heat exchange between the air in the oven 501, the air being heated to a high temperature by means of at least one heat generator 19a and moved by at least one fan 19c, and the element to be coated 1 triggers the polymerisation of the synthetic resin-based coating powders deposited on the surfaces of the elements 1 and the completion of the protection and coating cycle. The polymerisation unit 500 comprising the polymerisation oven 501 with high-temperature hot air, and the drying unit 300 comprising the drying oven 301 with hot air at a lower temperature are side by side and contiguous, separated by the common partition wall 18, which serves as the heating element for the drying oven 301.

The contribution of the heat recovered by convection from the wall 18 of the high-temperature polymerisation oven 501 advantageously heats the air in the drying oven 301 which has a lower temperature; the air thus heated in the drying oven 301 is simply moved by at least one fan 19b and flows against the elements to be coated 1 without requiring a further, specific heat energy contribution.

From exit of the polymerisation unit 500, the elements 1 now coated are then conveyed to the unloading station 600 within the safety area 50, where for unhooking and unloading from the overhead conveyor line 2 an loading basket 20 has been devised in which the coated elements 1 can be directly brought together in a vertical position following the unhooking. The unloading basket 20 can transition to a position that is first inclined and then horizontal by means of controlled sliding on wheels on a guide. Once it has reached the horizontal position on the floor of the unloading station 600, the unloading basket 20 with the coated elements functions directly as a conveying element for movement to preestablished locations, without further unloading and loading manoeuvres with small impacts that could damage the finished surfaces.

The system for powder coating as described hereinabove advantageously comprises the use of an advanced monitoring system that comprises the so-called system of "traceability of the lots" of the elements to be coated 1 within the course of the overhead conveyor line 2, based on the hooking position of the individual elements to be coated 1 in a specific production lot and on the speed of the conveyor line 2.

The position of an individual element and/or elements of a production lot in the coating system is known at all times, and it is therefore possible to adapt the production parameters to the specific needs of a production lot automatically, that is, by means of the activation/deactivation of supplementary and/or optional production steps, such as an optional stage of the pre-treatment tunnel 201, and parameters such as the amount of coating product in the coating booth 401, the temperatures of the drying oven 301 and the polymerisation oven 501 for example. The automatic management system of the system as described hereinabove can advantageously vary, automatically and with immediate effect, the system's most significant and powerful regulating parameter, that is, the speed of the overhead conveyor line 2.

Upon variation of the speed of the overhead conveyor line 2, the processing times change in real time for pre-treatment of the surfaces of the elements to be coated 1 in the pre-treatment tunnel 201, for the thermal processes in the drying 301 and polymerisation 501 ovens, and the stage of applying the synthetic resin-based coating powders electrostatically deposited on the elements to be coated 1 in the coating booth 401 without having to change other production parameters that have a different inertia and are often limited to within the technically possible range, such as the chemical concentration and the temperatures of the fluids for pre-treatment in the pre-treatment tunnel 201, the temperature of the drying oven 301 and the polymerisation oven 501, and the settings for the coating application parameters in the coating booth 401, for example.

Moreover, given the limited dimensions of the system as described hereinabove, the course of the overhead conveyor line 2 between the loading and unloading of the elements to be coated proves to be particularly brief and thus, with the speed of the overhead conveyor line 2 being equal, particularly short in duration with respect to a conventional system of inline coating.

This advantageously allows for variation of the speed of the overhead conveyor line 2 for the processing of a single lot of homogeneous elements to be coated, without this significantly conditioning the production of other previous and/or subsequent lots, given the limited number of lots hanging from the briefest overhead conveyor line 2 at the same time.

In the system as described hereinabove, the production process is therefore brief and dedicated specifically to the lot to be produced, with an advantageous increase in the quality of the finished product.

Considering also the possibility for the system to manage the necessities of the various lots, intervening automatically on the speed of the overhead conveyor 2 more easily than in conventional systems, there prove to be advantageous energy savings with better quality of the finished product.

By way of example, traditionally the heat exchange between the air and the elements to be coated 1 can be increased in the heating processes in the air polymerisation oven 501 by means of an increase in the temperature of the air by regulating the setting of the heat generator 19a; reaching the new, higher temperature requires time, substantially increases energy consumption and, beyond certain temperature levels, it leads to risks of defects on the elements to be coated 1 and dictates different choices relating to design and materials in the planning stage. If the need to increase the heat exchange is instead managed by slowing down the overhead conveyor 2 only when the specific lot is in that production stage, there will be none of the inconveniences among those mentioned hereinabove, but only a temporary drop in output, versus simplified construction and management of the system.

In the coating booth 401 for a lot of elements to be coated 1 and characterised by a particularly complex geometry, one can intervene on the parameters for regulating the coating powders, as is traditionally done, often achieving a compromise in terms of quality, given that there is a deviation from the optimal values of the coating parameters. However, by reducing the speed of the conveyor line 2 in the coating system, according to the invention, in a controlled manner according to pre-set criteria, one obtains a result consisting of better quality as the number of coats (vertical runs) of the sets of spray guns 104 and 105, with which the required layer of coating powder is deposited, is increased and thus the uniformity of the thickness of the coated layer increases. There are also savings relating to consumption of energy and the coating product, increasing in fact the deposition effectiveness of the coating on the pieces in the case of a number of coats.

The system for powder coating as described hereinabove makes it possible to unite all the production stages and the units predisposed thereto in a single, central block. This advantageously results in the fact that the operators in charge work outside the system in a safety area 50 at all times, are never surrounded by machinery and do not have to cross through the overhead conveyor line 2 that is loaded with elements to be coated 1 hanging therefrom, in order to reach their workstations, with a significant advantage for their safety and for the safety of all the other operators in the facility.

The system for powder coating has a further ordered division of the functions along the sides of the complex, with consequent simplification deriving from the possibility of compartmentalising the specific zones and dedicating the auxiliary systems (i.e., air recirculation/delivery/conditioning system, lighting system, pneumatic system, fire protection system and safety/emergency zones) in a manner specific to the individual zones.

The roof of the system 700, which is completely accessible, includes within a limited surface area all the overhead zones that require inspection for checks, regulation and maintenance, with the remarkable degree of simplification deriving from advantageously having all these zones contained in a single, limited area, rather than having them scattered over the roofs of a number of separate units and distributed over a larger, wider surface, as is the case in conventional coating systems of the prior art.

The system as described hereinabove advantageously allows for substantial space savings for installation, bringing the system components together in one block and eliminating corridors and areas separating the processing zones.

With the resulting compact configuration, the surface area of the floor required by the compact system 800 is about 20% of that needed for a conventional inline system.

Owing also to the limited dimensions, the system as described above can also be considered as a modular element of a larger coating system, in which each compact system can be advantageously dedicated to the specific process of production lots of elements to be coated 1 that are homogeneous, but of limited amounts, managed independently in all the specific production processes.

The operation of the system for powder coating is evident from that which has been described and illustrated. Specifically, in the loading station 100, the elements to be coated 1 are brought from a horizontal position to a vertical position by the overhead conveyor line 2 and brought inside the pre-treatment unit 200. In the pre-treatment unit 200, the elements to be coated 1 are typically subjected to an acid degreasing and acid deoxidation cycle, followed by a washing cycle with water. The overhead conveyor line 2 then conveys the elements to be coated 1 from the pre-treatment unit 200 to the next adjacent drying unit 300, where, with hot air, any trace of moisture is eliminated from the elements to be coated 1; the elements to be coated 1 are then introduced into the coating unit 400.

Specifically, in the coating booth 401, the elements to be coated 1 encounter a first set of electrostatic spray guns 104 and nozzles 4a, with spray guns on both sides as they proceed along their approaching path to the suction slot 106; the powders sprayed conveniently flow against the lateral a-c and rear surfaces d of the elements to be coated 1. Once they have passed the innermost curve of the booth, the elements to be coated 1 begin the departing path, while still in the booth, away from the suction slot and pass through another zone with a second set of electrostatic spray guns 105 and nozzles 5a, with spray guns spraying from both sides; the lateral a-c and front surfaces b of the elements to be coated 1 will conveniently collect the coating powder, directly, owing to the suitable inclination of the nozzle 5a, and by the so-called cascade effect, with the result that all four surfaces a-b-c-d of the elements to be coated 1 will be adequately coated with coating powder even when the geometry thereof is difficult to coat.

After exiting from the coating unit 400, the elements to be coated 1 are conveyed by the overhead conveyor line 2 through the polymerisation unit 500, where, in the polymerisation oven 501, the coating powders deposited on the elements to be coated 1 polymerise and complete the protection and coating cycle.

From the exit of the unit 500, the elements 1 are conveyed to the unloading station 600 by the overhead conveyor line 2 to be unhooked and collected in the storage baskets.

Modifications and variants are of course possible as regards the geometry of the compact system for powder coating as described hereinabove, based on the characteristics of the elements to be coated and the characteristics of the complete coating cycle.

It has been found in practice that a system for powder coating for elements to be coated of considerable length, according to the invention, proves to be particularly advantageous for offering compact dimensions, achieved by bringing together in a single, central block all the production stages, the units predisposed thereto and the various stations of the production process through which the overhead conveyor line 2 for conveying the elements to be coated 1 moves in a winding course of movement.

A system for powder coating for elements to be coated of considerable length according to the invention thus conceived is susceptible to numerous modifications and variants, as long as it falling within the scope of the appended claims. Moreover, all the details may be replaced with technically equivalent elements. All materials used, as well as the dimensions and proportions, may in practice be of any type, according to requirements and the state of the art.

## Claims

1. A system (I) for powder coating elements to be coated of considerable length, comprising an overall occupied floor space (800), a safety area (50) dedicated to the work activities of personnel, exhibiting a zone dedicated to the stage of loading (100) and a zone dedicated to the stage of unloading (600) the finished elements (1) from the overhead conveyor line (2), said safety area (50) marking the perimeter of a single, central block (101) exhibiting the activities of the production process and the specific units predisposed thereto and identified as a unit (200) dedicated to the pre-treatment of the elements to be coated, a unit (300) dedicated to the drying of the elements to be coated and a unit (500) for the polymerisation of coating powders deposited on the elements to be coated, there being further provided a unit (400) dedicated to coating and an overhead conveyor line (2) for the elements to be coated (1) that extends with a winding path, **characterised in that** said pre-treatment unit (200) comprises a pre-treatment tunnel (201) wherein stations (3), (4), (7) are provided with respective collecting tanks (5), (6), (8) along at least two tracts of the path of said overhead conveyor line (2) side by side at 180° and **in that** said unit (500) for the polymerisation of coating powders deposited on the elements to be coated comprises at least one polymerisation oven (501) with high-temperature hot air heated by at least one heat generator (19a), and that said unit (300) dedicated to the drying of the elements to be coated comprises at least one drying oven (301) with hot air at a lower temperature, said polymerisation oven (501) and said drying oven (301) being side by side and contiguous to each other and to said at least two tracts of the path of the conveyor line (2) side by side at 180°.

2. The system for powder coating according to claim 1, **characterised in that** it comprises a loading station (100) in said safety area (50) wherein said elements to be coated (1) of considerable length are hooked in a horizontal position to said overhead conveyor line (2) by means of hooking systems.

3. The system for powder coating according to claim 2, **characterised in that** said hooking systems, through an inclined upward path (2a) of said overhead conveyor line (2), translate said elements to be coated (1) from the horizontal position, in which they are found in the containers (1a) utilised for the storage thereof, to the vertical position hanging from said overhead conveyor line (2).

4. The system for powder coating according to claim 3 **characterised in that** said loading station (100) in said safety area (50) comprises, on the floor at said inclined path (2a), a loading system with an inclined ramp and protuberances (21), which prevents contact between the elements to be coated (1), particularly between said elements to be coated (1) that are of different lengths, and thus damage to the surfaces, during the transition from the horizontal position to the vertical position.

5. The system for powder coating according to claim 1, **characterised in that** said pre-treatment unit (200) comprises a pre-treatment tunnel (201), wherein said elements to be coated (1) are typically subjected to at least one acid degreasing cycle in the station (3) and to at least one acid deoxidation cycle in the station (4) by means of process fluids that spray said elements to be coated (1) from above and are then collected below by drips in at least one collecting and recirculation tank, that is, a tank (5) for the fluids of said station (3) and a tank (6) for the fluids of said station (4), respectively.

6. The system for powder coating according to claim 1, **characterised in that** said pre-treatment unit (200) comprises a pre-treatment tunnel (201) wherein said elements to be coated (1) pass through at least one washing station (7) with differently sprayed mains water, collected below in at least one tank (8), wherefrom it is then suitably treated and recycled.

7. The system for powder coating according to claim 5, **characterised in that** said pre-treatment unit (200) comprises a pre-treatment tunnel (201) wherein at least one wall (9) of said pre-treatment tunnel (201) is advantageously realised in plastic material.

8. The system for powder coating according to claim 5, **characterised in that** said pre-treatment unit (200) comprises a pre-treatment tunnel (201) wherein at least one of said collecting tanks (5) and (6) is advantageously realised in plastic material.

9. The system for powder coating according to claim 1, **characterised in that** said coating unit (400) comprises a coating booth (401) that has a triangular plan schematically identified by a first, a second and a third vertex (A, B and C), within which said conveyor line (2) enters the side (BC) having said second and third vertices (B and C) as the ends, completing a path that brings said elements to be coated (1) toward said first vertex (A), to then return and have said elements to be coated (1) exit from said side (BC) in a substantially symmetrical position with respect to said first vertex (A).

10. The system for powder coating according to claim 9, **characterised in that**, with respect to two sides of said elements to be coated (1), said coating booth (401) has at least a first set of electrostatic spray guns (104) for the coating powders with nozzles (4a) directed in the direction of movement of said conveyor line (2), and at least a second set of electrostatic spray guns (105) for said coating powders with nozzles (5a) directed in the direction opposite said movement of said conveyor line (2).

11. The system for powder coating according to claim 10, **characterised in that** said first and second sets of electrostatic spray guns (104) and (105) have reciprocating and controlled movement along a vertical axis so as to suitably spray the coating powders along the entire extension of the height of said elements to be coated (1).

12. The system for powder coating according to claim 10, **characterised in that** said first set of electrostatic spray guns (104) substantially sprays the lateral (a-c) and rear surfaces (d) of said elements to be coated (1), with said coating powders and that said second set of electrostatic spray guns (105) substantially sprays the lateral (a-c) and front surfaces (b) of said elements to be coated (1), with said coating powders.

13. The system for powder coating according to claim 9, **characterised in that** said coating booth (401) has at least one vertical suction inlet (106) of the air intake system of said coating booth (401); said vertical suction inlet (106) is suitably mounted at said first vertex (A), extends substantially along the entire height of said coating booth (401) and has horizontal and vertical sections that are adjustable by means of movable baffles and suitable movement and control systems.

14. The system for powder coating according to claim 13, **characterised in that** said vertical suction inlet (106) exhibits air intake formed and arranged in such a manner that the concentration of the flow of said air intake system of said coating booth (401), comprising the residual coating powder not directly deposited on said elements to be coated (1), flows against said elements to be coated (1), in the approaching path and in the departing path by means of said overhead conveyor line (2) to said first vertex (A), and advantageously increases deposition, on said elements to be coated (1), of the residual portion of coating powder not deposited and remaining suspended in the air in the booth.

15. The system for powder coating according to claim 9, **characterised in that** said coating booth (401) has at least one external or internal wall delimiting the path of the conveyor line (2) and constituted by suitable closed section sheets of plastic material (107), inserted on and kept tight by motorised rotatable rollers (108) that cause the rotation thereof, the portion of excess coating powders deposited on the walls being retrieved by means of the scraper blade (109), which, by suitably scraping against the flexible material of said sheet (107), detaches the coating powders, directing them into a special collection and recycling system.

16. The system for powder coating according to claim 9, **characterised in that** said coating booth (401) has a bottom where suitable section elements operate; when suitably moved, the section elements collect from said bottom the excess coating powders that have not deposited on the elements to be coated (1) and possibly accumulated there, conveying them toward said collection and recycling system.

17. The system for powder coating according to claim 1, **characterised in that** said polymerisation oven (501) and said drying oven (301) that are side by side and contiguous, are separated by at least one common partition wall (18), which serves as the heating element for said drying oven (301).

18. The system for powder coating according to claim 1, **characterised in that** in said unloading station (600), within the limits of said area (50), there is positioned in a vertical position at least one unloading basket wherein said coated elements (1) are directly brought together in a vertical position following the unhooking from said overhead conveyor line (2), said unloading basket (20) being able to transition to a position that is first inclined and then horizontal by means of controlled sliding on wheels on a guide.

19. The system for powder coating according to claim 1, **characterised in that** it is advantageously considered to be a modular element of a larger coating system, wherein it can be advantageously dedicated to a specific process of a production lot of elements to be coated (1) that are homogenous, but of reduced quantities, managed independently in all of the specific production processes through said units (200; 300; 400; 500).

20. A procedure for coating elements to be coated of considerable length (1), **characterised in that** it provides a coating booth (401) that has a triangular plan schematically identified by a first, a second and a third vertex (A, B and C), and a conveyor line (2) for the elements (1) that enters a side (BC) and extends along a path that brings said elements to be coated (1) toward said first vertex (A) and then returns and has said elements to be coated (1) exit from said side (BC) in a substantially symmetrical position with respect to said first vertex (A), said path being configured so that the elements to be coated (1), in transit in the booth, encounter direct spraying by sets of electrostatic spray guns (10 and 11), and coating powder, which, given that it has not directly deposited on said elements to be coated (1), travels toward a vertical suction inlet (12) located at said first vertex (A), and encounters the array of profiles in transit prior to being suctioned.

21. The procedure according to claim 20, **characterised in that** with the powders sprayed being equal, the portion of coating powders directly deposited on the elements to be coated (1) during transit through the coating booth increases, thereby augmenting the quality of the coating and the efficiency of the system, and likewise reducing the portion of powders retrieved by the air ventilation and filtering system of the booth.

22. The procedure according to claim 17, **characterised in that** the contribution of the heat recovered from said high-temperature polymerisation oven (501) by means of at least one wall (18) advantageously heats by convection the air in the said drying oven (301) which has a lower temperature, wherein the air thus heated is simply moved by at least one fan (19b) and flows against said elements to be coated (1) without requiring a further, specific heat energy contribution.

## Patentansprüche

1. Anlage (I) zum Pulverbeschichten von zu beschichtenden Elementen beträchtlicher Länge, umfassend eine gesamt besetzte Bodenfläche (800), einen Sicherheitsbereich (50) für die Arbeitstätigkeiten des Personals, der eine Zone für den Ladenschritt (100) und eine Zone für den Entladungsschritt (600) der fertigen Elemente (1) von der Hängeförderlinie (2) hat, wobei der Sicherheitsbereich (50) den Umfang eines einzelnen zentralen Blocks (101) begrenzt, der die Tätigkeiten des Produktionsverfahrens und die spezifischen dazu vorbereiteten Einheiten zeigt und der als Einheit (200) zur Vorbehandlung der zu beschichtenden Elemente identifiziert wird, eine Einheit (300) zur Trocknung der zu beschichtenden Elemente und eine Einheit (500) zur Polymerisation der Beschichtungspulver, die sich auf die zu beschichtenden Elemente abgelagert haben, wobei eine weitere Einheit (400) zur Beschichtung und eine Hängeförderlinie (2) für die zu beschichtenden Elemente (1) vorgesehen sind, die sich mit einem gewundenen Weg erstreckt, **dadurch gekennzeichnet, dass** die Vorbehandlungseinheit (200) einen Vorbehandlungstunnel (201) umfasst, wobei Stationen (3), (4), (7) mit den entsprechenden Sammeltanks (5), (6), (8) entlang mindestens zwei Stücke des Weges der Hängeförderlinie (2) Seite an Seite um 180° vorgesehen sind und dass die Einheit (500) zur Polymerisation der Beschichtungspulver, die sich auf den zu beschichtenden Elementen abgelagert haben, mindestens einen Polymerisationsofen (501) mit heißer Hochtemperaturluft umfasst, der durch mindestens einen Wärmeerzeuger (19a) erhitzt wird, und dass die Einheit (300) zur Trocknung der zu beschichtenden Elemente mindestens einen Trocknungsofen (301) mit Heißluft bei einer niedrigeren Temperatur umfasst, wobei der Polymerisationsofen (501) und der Trocknungsofen (301) Seite an Seite und benachbart zueinander und zu mindestens zwei Stücken des Weges der Förderlinie (2) Seite an Seite um 180° sind.

2. Anlage zum Pulverbeschichten nach Anspruch 1, **dadurch gekennzeichnet, dass** sie eine Ladestation (100) im Sicherheitsbereich (50) umfasst, wobei die zu beschichtenden Elemente (1) beträchtlicher Länge in eine horizontale Position zu der Hängeförderlinie (2) mittels Hakensysteme eingehängt sind.

3. Anlage zum Pulverbeschichten nach Anspruch 2, **dadurch gekennzeichnet, dass** die Hakensysteme durch einen geneigten ansteigenden Weg (2a) der Hängeförderlinie (2) die zu beschichtenden Elemente (1) von der horizontalen Position, in der sie in den Behältern (la), die für deren Lagerung verwendet werden, zu finden sind, zur vertikalen Position von der Hängeförderlinie (2) verschieben.

4. Anlage zum Pulverbeschichten nach Anspruch 3, **dadurch gekennzeichnet, dass** die Ladestation (100) im Sicherheitsbereich (50) auf dem Boden bei dem geneigten Weg (2a) ein Ladesystem mit einer geneigten Rampe und Vorsprüngen (21) umfasst, das den Kontakt zwischen den zu beschichtenden Elementen (1), besonders zwischen den zu beschichtenden Elementen (1), die in verschiedenen Längen sind, und somit Schäden an den Oberflächen während des Übergangs von der horizontalen Position in die vertikale Position verhindert.

5. Anlage zum Pulverbeschichten nach Anspruch 1, **dadurch gekennzeichnet, dass** die Vorbehandlungseinheit (200) einen Vorbehandlungstunnel (201) umfasst, wobei die zu beschichtenden Elemente (1) in der Regel mindestens einem Säureentfettungszyklus in der Station (3) und mindestens einem Säuredesoxidationszyklus in der Station (4) mittels Verfahrensflüssigkeiten unterzogen werden, die die zu beschichtenden Elemente (1) von oben versprühen, und die dann unten durch Tropfen in mindestens einem Sammel- und Rezirkulationstank, d. h. einem Tank (5) für die Flüssigkeiten der Station (3) und einem Tank (6) für die Flüssigkeiten der Station (4), jeweils gesammelt werden.

6. Anlage zum Pulverbeschichten nach Anspruch 1, **dadurch gekennzeichnet, dass** die Vorbehandlungseinheit (200) einen Vorbehandlungstunnel (201) umfasst, wobei die zu beschichtenden Elemente (1) durch mindestens eine Waschstation (7) mit unterschiedlich besprühtem Leitungswasser gehen, das unten in mindestens einem Tank (8) gesammelt wird, wo es dann entsprechend behandelt und recycelt wird.

7. Anlage zum Pulverbeschichten nach Anspruch 5, **dadurch gekennzeichnet, dass** die Vorbehandlungseinheit (200) einen Vorbehandlungstunnel (201) umfasst, wobei mindestens eine Wand (9) des Vorbehandlungstunnels (201) vorteilhafterweise aus Kunststoff realisiert ist.

8. Anlage zum Pulverbeschichten nach Anspruch 5, **dadurch gekennzeichnet, dass** die Vorbehandlungseinheit (200) einen Vorbehandlungstunnel (201) umfasst, wobei mindestens einer der Sammeltanks (5) und (6) vorteilhafterweise aus Kunststoff realisiert ist.

9. Anlage zum Pulverbeschichten nach Anspruch 1, **dadurch gekennzeichnet, dass** die Beschichtungseinheit (400) eine Beschichtungskabine (401) umfasst, die einen dreieckigen Grundriss aufweist, der schematisch durch einen ersten, einen zweiten und dritten Scheitelpunkt (A, B und C) identifiziert wird, innerhalb deren die Förderlinie (2) die Seite (BC) betritt, wobei sie den zweiten und dritten Scheitelpunkt (B und C) als Enden aufweist, wobei ein Weg, der die zu beschichtenden Elemente (1) in Richtung des ersten Scheitelpunktes (A) hin und dann zurück bringt, abgeschlossen wird, dann die zu beschichtenden Elemente (1) von der Seite (BC) in eine im wesentlichen symmetrische Position in Bezug auf den ersten Scheitelpunkt (A) austreten lässt.

10. Anlage zum Pulverbeschichten nach Anspruch 9, **dadurch gekennzeichnet, dass** die Beschichtungskabine (401), in Bezug auf die zwei Seiten der zu beschichtenden Elemente (1), mindestens einen ersten Satz von elektrostatischen Sprühpistolen (104) für die Beschichtungspulver mit Düsen (4a) aufweist, die in die Bewegungsrichtung der Förderlinie (2) gerichtet werden, und mindestens einen zweiten Set von elektrostatischen Sprühpistolen (105) für die Beschichtungspulver mit Düsen (5a), die in die der Förderlinie (2) entgegengesetzte Bewegungsrichtung gerichtet werden.

11. Anlage zum Pulverbeschichten nach Anspruch 10, **dadurch gekennzeichnet, dass** die ersten und zweiten Sätze von elektrostatischen Sprühpistolen (104) und (105) eine hin- und herbewegende und kontrollierte Bewegung entlang einer vertikalen Achse aufweisen, um entsprechend die Beschichtungspulver entlang der gesamten Erstreckung der Höhe der zu beschichtenden Elemente (1) zu sprühen.

12. Anlage zum Pulverbeschichten nach Anspruch 10, **dadurch gekennzeichnet, dass** der erste Satz von elektrostatischen Sprühpistolen (104) im wesentlichen die seitlichen (a-c) und hinteren Oberflächen (d) der zu beschichtenden Elemente (1) mit den Beschichtungspulvern versprüht und der zweite Satz von elektrostatischen Sprühpistolen (105) im wesentlichen die seitlichen (a-c) und die vorderen Oberflächen (b) der zu beschichtenden Elemente (1) mit den Beschichtungspulvern versprüht.

13. Anlage zum Pulverbeschichten nach Anspruch 9, **dadurch gekennzeichnet, dass** die Beschichtungskabine (401) mindestens eine vertikale Ansaugöffnung (106) von dem Lufteinlasssystem der Beschichtungskabine (401) aufweist, wobei die vertikale Ansaugöffnung (106) entsprechend auf dem ersten Scheitelpunkt (A) montiert ist, sich im Wesentlichen über die gesamte Höhe der Beschichtungskabine (401) erstreckt und horizontale und vertikale Abschnitte aufweist, die über bewegliche Leitbleche und geeignete Bewegung und Steuerungssysteme einstellbar sind.

14. Anlage zum Pulverbeschichten nach Anspruch 13, **dadurch gekennzeichnet, dass** die vertikale Ansaugöffnung (106) einen Lufteinlass aufweist, der so ausgebildet und angeordnet ist, dass die Konzentration der Strömung des Lufteinlasssystems der Beschichtungskabine (401), die die verbleibenden Beschichtungspulver umfasst, die sich auf die zu beschichtenden Elemente (1) nicht direkt abgelagert haben, gegen die zu beschichtenden Elemente (1) in den einlaufenden Weg und in den auslaufenden Weg mittels der Hängeförderlinie (2) zu dem ersten Scheitelpunkt (A) fließt, und vorteilhafterweise die Ablagerung auf die zu beschichtenden Elemente (1) mit dem verbleibenden Teil des Beschichtungspulvers erhöht, das sich nicht abgelagert hat und in der Luft in der Kabine schwebend geblieben ist.

15. Anlage zum Pulverbeschichten nach Anspruch 9, **dadurch gekennzeichnet, dass** die Beschichtungskabine (401) mindestens eine externe oder interne Wand aufweist, die den Weg der Förderlinie (2) abgrenzt und aus geeigneten geschlossenen Abschnittsplatten aus Kunststoff (107) besteht, die auf und von motorisierten drehbaren Rollen (108) eingefügt und fest gehalten werden, die deren Drehung verursachen, wobei der überschüssige Teil der Beschichtungspulver, die sich an den Wänden abgelagert haben, durch das Abstreifschild (109) zurückgeholt werden, das durch entsprechendes Kratzen gegen das flexible Material der Platte (107) die Beschichtungspulver abstreift, wobei sie in eine besondere Sammel- und Recyclingsanlage geleitet werden.

16. Anlage zum Pulverbeschichten nach Anspruch 9, **dadurch gekennzeichnet, dass** die Beschichtungskabine (401) einen Boden aufweist, wo geeignete Abschnittselemente tätig sind, wobei die Abschnittselemente, wenn sie entsprechend bewegt werden, die überschüssigen Beschichtungspulver vom Boden sammeln, die sich auf die zu beschichtenden Elemente (1) nicht abgelagert haben und möglicherweise da angesammelt werden, wobei sie in Richtung der Sammel- und Recyclingsanlage gefördert werden.

17. Anlage zum Pulverbeschichten nach Anspruch 1, **dadurch gekennzeichnet, dass** der Polymerisationsofen (501) und der Trocknungsofen (301), die Seite an Seite und benachbart sind, durch mindestens eine gemeinsame Trennwand (18) getrennt sind, die als Heizelement für den Trocknungsofen (301) dient.

18. Anlage zum Pulverbeschichten nach Anspruch 1, **dadurch gekennzeichnet, dass** mindestens ein Entladekorb in der Entladestation (600), innerhalb der Grenzen des Bereichs (50), in einer vertikalen Position positioniert ist, wobei die beschichteten Elemente (1) in eine vertikale Position nach dem Aushaken von der Hängeförderlinie (2) direkt zusammengeführt werden, wobei der Entladekorb (20) in der Lage ist, zu einer Position, die zunächst geneigt und dann horizontal ist, durch gesteuertes Gleiten auf Rädern auf einer Führung zu übergehen.

19. Anlage zum Pulverbeschichten nach Anspruch 1, **dadurch gekennzeichnet, dass** es vorteilhaft als modulares Element einer größeren Beschichtungsanlage angesehen wird, wobei es vorteilhaft in einem bestimmten Verfahren einer Produktion vieler zu beschichtenden Elemente (1) eingesetzt werden kann, die homogen aber von reduzierten Mengen sind, die unabhängig in allen spezifischen Produktionsverfahren durch die Einheiten (200; 300; 400; 500) verwaltet werden.

20. Methode zur Beschichtung von zu beschichtenden Elementen beträchtlicher Länge (1), **dadurch gekennzeichnet, dass** sie eine Beschichtungskabine (401) vorsieht, die einen dreieckigen Grundriss aufweist, der schematisch durch einen ersten, einen zweiten und dritten Scheitelpunkt (A, B und C) identifiziert wird, und eine Förderlinie (2) für die Elemente (1), die eine Seite (BC) betritt und die sich entlang eines Wegs erstreckt, der die zu beschichtenden Elemente (1) in Richtung des ersten Scheitelpunkts (A) hin und zurück bringt, und dann die zu beschichtenden Elemente (1) von der Seite (BC) in einer im wesentlichen symmetrischen Position in Bezug auf den ersten Scheitelpunkt (A) austreten lässt, wobei der Weg so konfiguriert ist, dass die zu beschichtenden Elemente (1), beim Durchgehen der Kabine, direktem Versprühen durch Sätze von elektrostatischen Sprühpistolen (10 und 11) begegnen und Beschichtungspulver, das, angesichts der Tatsache, dass es sich auf die zu beschichtenden Elemente nicht direkt abgelagert hat, in Richtung einer vertikalen Ansaugöffnung (12), die sich am ersten Scheitelpunkt (A) befindet, läuft und der Reihe der durchgehenden Profile begegnet, bevor es abgesaugt wird.

21. Methode nach Anspruch 20, **dadurch gekennzeichnet, dass**, angesichts der Tatsache, dass die besprühten Pulver gleich sind, der Teil der Beschichtungspulver, die sich auf den zu beschichtenden Elementen (1) abgelagert haben, während des Übergangs durch die Beschichtungskabine steigt, wobei die Qualität der Beschichtung und die Effizienz der Anlage dadurch verbessert werden, und ebenso der Teil der durch die Luftzirkulation und das Filtersystem der Kabine zurückgeholten Pulver reduziert wird.

22. Methode nach Anspruch 17, **dadurch gekennzeichnet, dass** der Beitrag der Hitze, die vom Hochtemperatur-Polymerisationsofen (501) mittels mindestens einer Wand (18) zurückgewonnen wird, vorteilhafterweise durch Konvektion die Luft im Trocknungsofen (301) erhitzt, der eine niedrigere Temperatur aufweist, wobei die so erhitzte Luft einfach durch mindestens einen Ventilator (19b) bewegt wird und gegen die zu beschichtenden Elemente (1) fließt, ohne weiteren, spezifischen Heizenergiebeitrag zu brauchen.

## Revendications

1. Système (I) pour le revêtement par poudre d'éléments à revêtir de longueur significative, comprenant un espace au sol globalement occupé (800), une zone de sécurité (50) dédiée aux activités de travail du personnel, présentant une zone dédiée à l'étape de chargement (100) et une zone dédiée à l'étape de déchargement (600) des éléments finis (1) depuis la ligne de convoyeur aérien (2), ladite zone de sécurité (50) marquant le périmètre d'un bloc central unique (101) présentant les activités du processus de production et les unités spécifiques prédisposées pour celui-ci et identifiées comme une unité (200) dédiée au prétraitement des éléments à revêtir, une unité (300) dédiée au séchage des éléments à revêtir et une unité (500) pour la polymérisation des poudres de revêtement déposées sur les éléments à revêtir, où est aussi disposée une unité (400) dédiée au revêtement et une ligne de convoyeur aérien (2) pour les éléments à revêtir (1) qui se développe selon un cheminement sinueux, **caractérisé en ce que** ladite unité de prétraitement (200) comprend un tunnel de prétraitement (201) dans lequel les postes (3), (4), (7) sont équipés de réservoirs collecteurs (5), (6), (8) respectifs, le long desquels au moins deux tronçons du cheminement de ladite ligne de convoyeur aérien (2) se trouvent côte à côte à 180° et **en ce que** ladite unité (500) pour la polymérisation des poudres de revêtement déposées sur les élément à revêtir, comprend au moins un four de polymérisation (501) avec de l'air chaud à haute température chauffé par au moins un générateur de chaleur (19a), et **en ce que** ladite unité (300) dédiée au séchage des éléments à revêtir, comprend au moins un four de séchage (301) avec de l'air chaud à une température plus basse, ledit four de polymérisation (501) et ledit four de séchage (301) étant côte à côte et contigus l'un à l'autre et auxdits au moins deux tronçons du cheminement de la ligne de convoyeur (2), étant côte à côte à 180°.

2. Système pour le revêtement par poudre selon la revendication 1, **caractérisé en ce qu'**il comprend un poste de chargement (100) dans ladite zone de sécurité (50), où lesdits éléments à revêtir (1) de longueur significative sont accrochés dans une position horizontale à ladite ligne de convoyeur aérien (2) par des systèmes de crochets.

3. Système pour le revêtement par poudre selon la revendication 2, **caractérisé en ce que** lesdits systèmes de crochets, par l'intermédiaire d'un cheminement ascendant incliné (2a) de ladite ligne de convoyeur aérien (2), transfèrent lesdits éléments à revêtir (1) de la position horizontale, dans laquelle ils se trouvent dans les conteneurs (1a) utilisés pour leur stockage, à la position verticale, étant suspendus à ladite ligne de convoyeur aérien (2).

4. Système pour le revêtement par poudre selon la revendication 3, **caractérisé en ce que** ledit poste de chargement (100) dans ladite zone de sécurité (50) comprend, sur le sol au niveau dudit cheminement incliné (2a), un système de chargement avec une rampe inclinée et des saillies (21), qui empêche le contact entre les éléments à revêtir (1), en particulier entre lesdits éléments à revêtir (1) de différentes longueurs, et par conséquent, l'endommagement des surfaces, pendant le transfert de la position horizontale à la position verticale.

5. Système pour le revêtement par poudre selon la revendication 1, **caractérisé en ce que** ladite unité de prétraitement (200) comprend un tunnel de prétraitement (201), dans lequel lesdits éléments à revêtir (1) sont typiquement exposés à au moins un cycle de dégraissage acide dans le poste (3) et à au moins un cycle de désoxydation acide dans le poste (4) par des fluides de processus pulvérisés sur lesdits éléments à revêtir (1) par le dessus et ensuite collectés en dessous par gouttes dans au moins un réservoir collecteur et de recirculation, soit un réservoir (5) pour les fluides dudit poste (3) et un réservoir (6) pour les fluides dudit poste (4), respectivement.

6. Système pour le revêtement par poudre selon la revendication 1, **caractérisé en ce que** ladite unité de prétraitement (200) comprend un tunnel de prétraitement (201), dans lequel lesdits éléments à revêtir (1) passent par au moins un poste de lavage (7) avec de l'eau de robinet différemment pulvérisée, collectée en dessous dans au moins un réservoir (8), à partir duquel elle est ensuite traitée et recyclée adéquatement.

7. Système pour le revêtement par poudre selon la revendication 5, **caractérisé en ce que** ladite unité de prétraitement (200) comprend un tunnel de prétraitement (201), dans lequel au moins une paroi (9) dudit tunnel de prétraitement (201) est avantageusement fabriquée en matière plastique.

8. Système pour le revêtement par poudre selon la revendication 5, **caractérisé en ce que** ladite unité de prétraitement (200) comprend un tunnel de prétraitement (201), dans lequel au moins l'un desdits réservoirs collecteurs (5) et (6) est avantageusement fabriqué en matière plastique.

9. Système pour le revêtement par poudre selon la revendication 1, **caractérisé en ce que** ladite unité de revêtement (400) comprend une cabine de revêtement (401) qui a un plan triangulaire schématiquement identifié par un premier, un deuxième et un troisième sommet (A, B et C), dans laquelle ladite ligne de convoyeur (2) entre du côté (BC) ayant lesdits deuxième et troisième sommets (B et C) comme extrémités, réalisant un cheminement qui amène lesdits éléments à revêtir (1) vers ledit premier sommet (A), puis retourne et fait sortir lesdits éléments à revêtir (1) par ledit côté (BC) dans une position essentiellement symétrique par rapport audit premier sommet (A).

10. Système pour le revêtement par poudre selon la revendication 9, **caractérisé en ce que**, en ce qui concerne deux côtés desdits éléments à revêtir (1), ladite cabine de revêtement (401) comporte au moins un premier groupe de pistolets de pulvérisation électrostatique (104) pour les poudres de revêtement, avec buses (4a) dirigées dans la direction de mouvement de ladite ligne de convoyeur (2), et au moins un deuxième groupe de pistolets de pulvérisation électrostatique (105) pour lesdites poudres de revêtement, avec buses (5a) dirigées dans la direction opposée audit mouvement de ladite ligne de convoyeur (2).

11. Système pour le revêtement par poudre selon la revendication 10, **caractérisé en ce que** lesdits premier et deuxième groupes de pistolets de pulvérisation électrostatique (104) et (105) présentent un mouvement alternatif et contrôlé le long d'un axe vertical, de sorte à pulvériser correctement les poudres de revêtement sur tout le développement de la hauteur desdits éléments à revêtir (1).

12. Système pour le revêtement par poudre selon la revendication 10, **caractérisé en ce que** ledit premier groupe de pistolets de pulvérisation électrostatique (104) pulvérise essentiellement les surfaces latérales (a-c) et postérieures (d) desdits éléments à revêtir (1) avec lesdites poudres de revêtement et **en ce que** ledit deuxième groupe de pistolets de pulvérisation électrostatique (105) pulvérise essentiellement les surfaces latérales (a-c) et frontales (b) desdits éléments à revêtir (1) avec lesdites poudres de revêtement.

13. Système pour le revêtement par poudre selon la revendication 9, **caractérisé en ce que** ladite cabine de revêtement (401) présente au moins une entrée d'aspiration verticale (106) du système de prise d'air de ladite cabine de revêtement (401) ; ladite entrée d'aspiration verticale (106) est correctement montée au niveau dudit premier sommet (A), se développe essentiellement le long de toute la hauteur de ladite cabine de revêtement (401) et comporte des sections horizontales et verticales qui sont ajustables par des déflecteurs mobiles et par des systèmes appropriés de commande et mouvement.

14. Système pour le revêtement par poudre selon la revendication 13, **caractérisé en ce que** ladite entrée d'aspiration verticale (106) présente une prise d'air formée et disposée de telle sorte que la concentration du flux dudit système de prise d'air de ladite cabine de revêtement (401), y compris la poudre de revêtement résiduelle n'étant pas directement déposée sur lesdits éléments à revêtir (1), rencontre lesdits éléments à revêtir (1), dans le cheminement d'approche et dans le cheminement de départ par le biais de ladite ligne de convoyeur aérien (2) vers ledit premier sommet (A), et avantageusement augmente le dépôt, sur lesdits éléments à revêtir (1), de la partie résiduelle de la poudre de revêtement non déposée et restant en suspens dans l'air de la cabine.

15. Système pour le revêtement par poudre selon la revendication 9, **caractérisé en ce que** ladite cabine de revêtement (401) présente au moins une paroi externe ou interne délimitant le cheminement de la ligne de convoyeur (2) et constituée de plaques de section fermée appropriée en matière plastique (107), insérées sur et retenues par des rouleaux rotatifs motorisés (108) qui entraînent leur rotation, la partie excessive de poudres de revêtement déposée sur les parois étant éliminée par la lame racleuse (109) qui, en raclant correctement contre la matière flexible de ladite plaque (107), détache les poudres de revêtement, les dirigeant dans un système spécial de collecte et recyclage.

16. Système pour le revêtement par poudre selon la revendication 9, **caractérisé en ce que** ladite cabine de revêtement (401) présente un fond où fonctionnent des éléments de section appropriés ; quand déplacés correctement, les éléments de section collectent sur ledit fond l'excès de poudres de revêtement qui n'a pas été déposé sur les éléments à revêtir (1) et accumulé là dans la mesure du possible, l'acheminant vers ledit système de collecte et recyclage.

17. Système pour le revêtement par poudre selon la revendication 1, **caractérisé en ce que** ledit four de polymérisation (501) et ledit four de séchage (301), qui se trouvent côte à côté et contigus, sont séparés par au moins une paroi commune de division (18), qui sert d'élément chauffant pour ledit four de séchage (301).

18. Système pour le revêtement par poudre selon la revendication 1, **caractérisé en ce que**, dans ledit poste de déchargement (600), dans les limites de ladite zone (50), au moins un panier de déchargement se trouve dans une position verticale, dans lequel lesdits éléments revêtus (1) sont directement mis ensemble dans une position verticale, après le décrochage de ladite ligne de convoyeur aérien (2), ledit panier de déchargement (20) pouvant passer d'une position qui est d'abord inclinée, puis horizontale, par le biais d'un coulissement contrôlé de roues sur une coulisse.

19. Système pour le revêtement par poudre selon la revendication 1, **caractérisé en ce qu'**il est avantageusement considéré comme un élément modulaire d'un système de revêtement plus grand, dans lequel il peut être avantageusement dédié à un processus spécifique d'un lot de production d'éléments à revêtir (1) homogènes, mais en quantités réduites, gérés indépendamment dans tous les processus spécifiques de production par l'intermédiaire desdites unités (200 ; 300 ; 400 ; 500).

20. Méthode pour le revêtement d'éléments à revêtir de longueur significative (1), **caractérisée en ce qu'**elle fournit une cabine de revêtement (401) qui a un plan triangulaire schématiquement identifié par un premier, un deuxième et un troisième sommet (A, B et C), et une ligne de convoyeur (2), pour les éléments (1), qui entre d'un côté (BC) et se développe le long d'un cheminement qui amène lesdits éléments à revêtir (1) vers ledit premier sommet (A), puis retourne et fait sortir lesdits éléments à revêtir (1) par ledit côté (BC) dans une position essentiellement symétrique par rapport audit premier sommet (A), ledit cheminement étant configuré de sorte que les éléments à revêtir (1), en transit dans la cabine, subissent une pulvérisation directe par des groupes de pistolets de pulvérisation électrostatique (10 et 11), et la poudre de revêtement qui, étant donné qu'elle n'a pas été directement déposée sur lesdits éléments à revêtir (1), se déplace vers une entrée d'aspiration verticale (12) située audit premier sommet (A), et rencontre l'agencement de profilés en transit avant d'être aspirée.

21. Méthode selon la revendication 20, **caractérisée en ce que**, avec les poudres pulvérisées étant de façon égale, la partie des poudres de revêtement, déposée directement sur les éléments à revêtir (1) pendant le transit par la cabine de revêtement, augmente, optimisant ainsi la qualité du revêtement et l'efficacité du système, et de même réduisant la partie des poudres récupérée par le système de filtration et ventilation de la cabine.

22. Méthode selon la revendication 17, **caractérisée en ce que** l'apport de la chaleur récupérée à partir dudit four de polymérisation à haute température (501) par le biais d'au moins une paroi (18), chauffe avantageusement par convection l'air dans ledit four de séchage (301) qui a une température plus basse, où l'air chauffé de cette façon se déplace simplement par le biais d'au moins un ventilateur (19b) et rencontre lesdits éléments à revêtir (1) sans exiger un apport supplémentaire spécifique d'énergie thermique.
